# EUROPEAN PATENT APPLICATION

(11) **EP 3 474 488 A1**
(43) Date of publication of application: **24.04.2019**
(21) Application number: 17812976.3
(22) Date of filing: 28.03.2017
(51) Int. Cl.: H04L 9/32, G06F 21/44, H04L 9/08

(54) **SYSTEM, CERTIFICATION AUTHORITY, VEHICLE-MOUNTED COMPUTER, VEHICLE, PUBLIC KEY CERTIFICATE ISSUANCE METHOD, AND PROGRAM**

(30) Priority: 17.06.2016 JP 2016121229
(71) Applicant: KDDI Corporation, Tokyo 163-8003 (JP)
(72) Inventor: TAKEMORI Keisuke, Fujimino-shi Saitama 356-8502 (JP); MIZOGUCHI Seiichiro, Fujimino-shi Saitama 356-8502 (JP); KAWABATA Hideaki, Fujimino-shi Saitama 356-8502 (JP); KUBOTA Ayumu, Fujimino-shi Saitama 356-8502 (JP)
(74) Representative: Wallinger, Michael
(86) International application number: PCT/JP2017/012536
(87) International publication number: WO 2017/217070

(57) **Abstract**

A system includes a certification authority and a vehicle-mounted computer mounted in a vehicle. The certification authority includes a certification authority key storage that stores a certification authority public key certificate and a certification authority private key, a first communicator that receives an issuance request that is configured to request issuance of a vehicle-mounted computer public key certificate, and a vehicle-mounted computer public key certificate issuer that is configured to apply a signature to the vehicle-mounted computer public key included in the issuance request with the certification authority private key and issue the vehicle-mounted computer public key certificate. The first communicator is configured to transmit the vehicle-mounted computer public key certificate to the vehicle-mounted computer that is a transmission source of the issuance request. The vehicle-mounted computer includes a vehicle-mounted computer key generator that is configured to generate the vehicle-mounted computer public key and a vehicle-mounted computer private key that is paired with the vehicle-mounted computer public key, and a public key certificate acquirer that is configured to transmit the issuance request to the certification authority and acquires the vehicle-mounted computer public key certificate that the certification authority transmits in response to the issuance request.

## Description

### TECHNICAL FIELD

Embodiments of the present invention relate to a system, a certification authority, a vehicle-mounted computer, a vehicle, a public key certificate issuing method, and a program.

Priority is claimed on Japanese Patent Application No. 2016-121229, filed June 17, 2016, the content of which is incorporated herein by reference.

### BACKGROUND ART

When an automobile communicates with a roadside device, an external server, or the like, it is necessary for devices outside the automobile to authenticate the automobile, electronic control units (ECUs) included in the automobile, applications installed in the ECUs, or the like.

A scheme of issuing a public key certificate relating to Vehicle to X (V2X) communication (see, for example, Non-Patent Document 1) is known for technology related to devices other than automobiles to authenticate an automobile or the like.

### CITATION LIST

### Non-Patent Literature

### [Non-Patent Document 1]

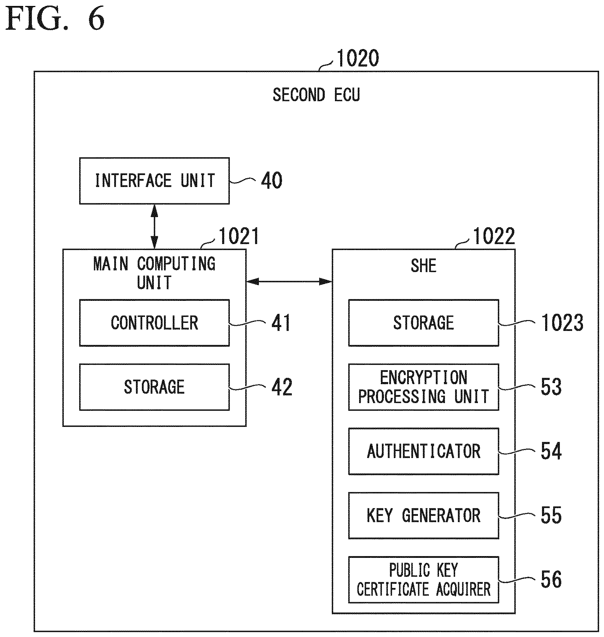

"Security Guidelines for Driver Assistance Communications System, ITS FORUM RC-009 ver. 1.0," p. 50, Fig. 6-1, Internet <URL: http://www.itsforum.gr.jp/Public/J7Database/p41/ITS_FORUM_RC009V1_0.pdf>

### SUMMARY OF INVENTION

### Problem to be solved by the Invention

When communication is performed between an automobile and a device that cannot be directly managed by an automobile manufacturer, it is assumed that there is a need to perform authentication using a public key certificate issued by a trusted third party.

Among certification authority service providers (certification authorities: CA) that issue public key certificates to websites on the Internet or the like, there are service providers that issue public key certificates without strictly checking the authenticated party. Therefore, due to their low trustworthiness, existing certification authorities on the Internet may sometimes be inappropriate for issuing public key certificates to equipment (automobiles) relating to human life.

Further, in general, certification authorities check the existence of a business entity to which a public key certificate is to be issued by acquiring a certified copy of registration of the business entity or by making a call to a representative telephone number described in the certified copy of registration. Assuming that a public key certificate is issued to an automobile, an ECU (Electronic Control Unit), or an application installed in the ECU, there is no way to check whether or not issuance is possible, since it is not possible to confirm with a certified copy of registration or a phone call.

The present invention has been made to solve the above problems and it is an object of the present invention to appropriately issue a public key certificate to an automobile, an ECU, or an application installed in the ECU.

### Means for Solving the Problem

(1) An aspect of the present invention is a system including a certification authority and a vehicle-mounted computer which is mounted in a vehicle, wherein the certification authority includes a certification authority key storage configured to store a certification authority public key certificate and a certification authority private key, a first communicator configured to receive an issuance request that is configured to request issuance of a vehicle-mounted computer public key certificate of a vehicle-mounted computer public key from the vehicle-mounted computer, and a vehicle-mounted computer public key certificate issuer configured to apply a signature to the vehicle-mounted computer public key included in the issuance request with the certification authority private key and to issue the vehicle-mounted computer public key certificate, wherein the first communicator is configured to transmit the issued vehicle-mounted computer public key certificate to the vehicle-mounted computer that is a transmission source of the issuance request, and the vehicle-mounted computer includes a vehicle-mounted computer key generator configured to generate the vehicle-mounted computer public key and a vehicle-mounted computer private key that is paired with the vehicle-mounted computer public key, and a public key certificate acquirer configured to transmit the issuance request to the certification authority and to acquire the vehicle-mounted computer public key certificate that the certification authority transmits in response to the issuance request.
(2) An aspect of the present invention is the system according to the above aspect (1), wherein: the certification authority further includes a first authenticator configured to perform authentication with the vehicle-mounted computer on the basis of a common key; the vehicle-mounted computer further includes a second authenticator configured to perform authentication with the first authenticator of the certification authority on the basis of the common key; and the vehicle-mounted computer public key certificate issuer is configured to issue the vehicle-mounted computer public key certificate if the authentication of the first authenticator succeeds.
(3) An aspect of the present invention is the system according to the above aspect (2), wherein the common key includes an initial key held in the vehicle-mounted computer, the vehicle-mounted computer further includes a first storage configured to store the initial key, and a second communicator configured to transmit identification information of the vehicle-mounted computer to the certification authority, and the certification authority further includes a second storage configured to store a master key used to generate the initial key, and an initial key generator configured to generate the initial key on the basis of the master key and the identification information of the vehicle-mounted computer transmitted by the vehicle-mounted computer.
(4) An aspect of the present invention is the system according to the above aspect (2), wherein: the first authenticator is configured to exchange the common key with the second authenticator whose authentication has succeeded; and the second authenticator is configured to exchange the common key with the first authenticator whose authentication has succeeded.
(5) An aspect of the present invention is the system according to any one of the above aspects (1) to (4), wherein the certification authority is an intermediate certification authority included in the vehicle.
(6) An aspect of the present invention is the system according to any one of the above aspects (1) to (5), wherein the certification authority is arranged in the vehicle-mounted computer or in a communication module in the vehicle.
(7) An aspect of the present invention is the system according to any one of the above aspects (1) to (4), wherein the certification authority is arranged in a server device to which the certification authority is connected via a communication module of the vehicle or in a maintenance tool to which the certification authority is connected via a diagnostic port of the vehicle.
(8) An aspect of the present invention is a certification authority including a certification authority key storage configured to store a certification authority public key certificate and a certification authority private key, a communicator configured to receive an issuance request that is configured to request issuance of a vehicle-mounted computer public key certificate of a vehicle-mounted computer public key transmitted by a vehicle-mounted computer, and a vehicle-mounted computer public key certificate issuer configured to apply a signature to the vehicle-mounted computer public key included in the issuance request with the certification authority private key and to issue the vehicle-mounted computer public key certificate, wherein the communicator is configured to transmit the issued vehicle-mounted computer public key certificate to the vehicle-mounted computer that is a transmission source of the issuance request.
(9) An aspect of the present invention is a vehicle-mounted computer that is mounted in a vehicle, the vehicle-mounted computer including a vehicle-mounted computer key generator configured to generate a vehicle-mounted computer public key and a vehicle-mounted computer private key that is paired with the vehicle-mounted computer public key, and a public key certificate acquirer configured to transmit an issuance request that is configured to request issuance of a vehicle-mounted computer public key certificate of the vehicle-mounted computer public key to a certification authority and to acquire the vehicle-mounted computer public key certificate that the certification authority transmits in response to the issuance request.
(10) An aspect of the present invention is a vehicle including the vehicle-mounted computer according to the above aspect (9).
(11) An aspect of the present invention is a vehicle including the certification authority according to the above aspect (8), and the vehicle-mounted computer according to the above aspect (9).
(12) An aspect of the present invention is a public key certificate issuing method that is performed by a system including a certification authority and a vehicle-mounted computer that is mounted in a vehicle, the public key certificate issuing method including storing, by the certification authority, a certification authority public key certificate and a certification authority private key, generating, by the vehicle-mounted computer, a vehicle-mounted computer public key and a vehicle-mounted computer private key that is paired with the vehicle-mounted computer public key, transmitting, the vehicle-mounted computer, an issuance request that is configured to request issuance of a vehicle-mounted computer public key certificate of the vehicle-mounted computer public key to the certification authority, receiving, the certification authority, the issuance request transmitted by the vehicle-mounted computer, applying, the certification authority, a signature to the vehicle-mounted computer public key included in the issuance request with the certification authority private key and issuing the vehicle-mounted computer public key certificate, transmitting, the certification authority, the issued vehicle-mounted computer public key certificate to the vehicle-mounted computer that is a transmission source of the issuance request, and acquiring, the vehicle-mounted computer, the vehicle-mounted computer public key certificate transmitted by the certification authority.
(13) An aspect of the present invention is a program causing a computer of a certification authority to execute processes of storing a certification authority public key certificate and a certification authority private key, receiving an issuance request that is configured to request issuance of a vehicle-mounted computer public key certificate of a vehicle-mounted computer public key from a vehicle-mounted computer, applying a signature to the vehicle-mounted computer public key included in the issuance request with the certification authority private key and issuing the vehicle-mounted computer public key certificate, and transmitting the issued vehicle-mounted computer public key certificate to the vehicle-mounted computer that is a transmission source of the issuance request.
(14) An aspect of the present invention is a program causing a vehicle-mounted computer to execute processes of generating a vehicle-mounted computer public key and a vehicle-mounted computer private key that is paired with the vehicle-mounted computer public key, transmitting an issuance request that is configured to request issuance of a vehicle-mounted computer public key certificate of the vehicle-mounted computer public key to a certification authority, and acquiring the vehicle-mounted computer public key certificate transmitted by the certification authority.

### Advantageous Effects of Invention

According to the present invention, it is possible to appropriately issue a public key certificate to an automobile, an ECU, or an application installed in the ECU.

### BREIEF DESCRIPTION OF DRAWINGS

Fig. 1 is a configuration diagram showing a hierarchical structure for issuing a public key certificate according to the present embodiment.
Fig. 2 is a functional block diagram showing a root certification authority, an OEM certification authority, and an in-vehicle certification authority according to the present embodiment.
Fig. 3 is a sequence chart showing an example of an operation for issuing a public key certificate according to the present embodiment.
Fig. 4 is a configuration diagram showing an exemplary configuration of an automobile according to the present embodiment.
Fig. 5 is a functional block diagram showing a first ECU according to the present embodiment.
Fig. 6 is a functional block diagram showing a second ECU according to the present embodiment.
Fig. 7 is a diagram showing an operation for issuing a public key certificate according to the present embodiment.
Fig. 8 is a sequence chart showing an operation of an initial key writing device according to the present embodiment.
Fig. 9 is a diagram showing an operation for distributing an in-vehicle common key according to the present embodiment.
Fig. 10 is a configuration diagram showing an exemplary configuration of an automobile according to the present embodiment.
Fig. 11 is a diagram showing an operation for issuing a public key certificate according to the present embodiment.
Fig. 12 is a configuration diagram showing an exemplary configuration of an automobile according to the present modification.
Fig. 13 is a diagram showing an operation for issuing a public key certificate according to the present modification.
Fig. 14 is a configuration diagram showing an exemplary configuration of an automobile according to the present embodiment.
Fig. 15 is a diagram showing an operation for issuing a public key certificate according to the present embodiment.
Fig. 16 is a configuration diagram showing a hierarchical structure for issuing a public key certificate according to the present modification.
Fig. 17 is a diagram showing an operation for issuing a public key certificate according to the present modification.

### DESCRIPTION OF EMBODIMENTS

Next, modes for carrying out the present invention will be described with reference to the drawings. Embodiments described below are merely examples and embodiments to which the present invention is applied are not limited to the following embodiments.

In all drawings for explaining the embodiments, the same reference signs are used for components having the same functions and repeated descriptions will be omitted. In the following embodiments, an automobile will be described as an example of a vehicle.

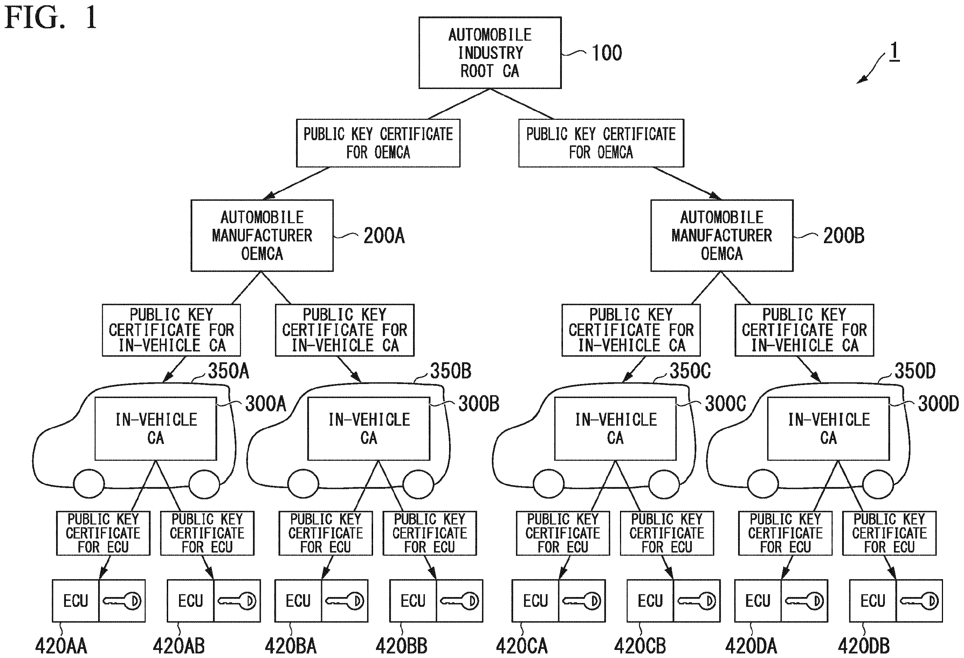

Fig. 1 is a diagram showing an example of a hierarchical structure 1 for issuing a public key certificate according to an embodiment. The hierarchical structure 1 includes a root certification authority (Root CA) 100, an original equipment manufacturer CA (OEMCA) 200A, an OEMCA 200B, an in-vehicle CA 300A, an in-vehicle CA 300B, an in-vehicle CA 300C, and an in-vehicle CA 300D. The in-vehicle CA 300A is mounted in an automobile 350A, the in-vehicle CA 300B is mounted in an automobile 350B, the in-vehicle CA 300C is mounted in an automobile 350C, and the in-vehicle CA 300D is mounted in an automobile 350D.

Further, an ECU 420AA and an ECU 420AB are mounted in the automobile 350A. An ECU 420BA and an ECU 420BB are mounted in the automobile 350B. An ECU 420CA and an ECU 420CB are mounted in the automobile 350C. An ECU 420DA and an ECU 420DB are mounted in the automobile 350D.

Hereinafter, the OEMCA 200A and the OEMCA 200B will be referred to as OEMCAs 200 unless otherwise distinguished. The in-vehicle CA 300A, the in-vehicle CA 300B, the in-vehicle CA 300C, and the in-vehicle CA 300D will be referred to as in-vehicle CAs 300 unless otherwise distinguished. The automobile 350A, the automobile 350B, the automobile 350C, and the automobile 350D will be referred to as automobiles 350 unless otherwise distinguished. The ECU 420AA, the ECU 420AB, the ECU 420BA, the ECU 420BB, the ECU 420CA, the ECU 420CB, the ECU 420DA, and the ECU 420DB will be referred to as ECUs 420 unless otherwise distinguished. The same is true for components of each of the OEMCAs 200, the in-vehicle CAs 300, and the ECUs 420.

In the hierarchical structure 1, the root CA 100 is the top layer, the OEMCAs 200 are a layer lower than the root CA 100, and the in-vehicle CAs 300 are a layer lower than the OEMCAs 200. On the basis of this hierarchical structure, a public key certificate is issued in the automobile.

The root CA 100 has a public key and a private key. Each of the OEMCAs 200 has a public key and a private key. Each of the ECUs 420 has a public key and a private key.

The root CA 100 is an authority that authenticates the OEMCAs 200 operated by their automobile manufacturers. By providing the root CA 100 in the hierarchical structure 1, mutual authentication based on public key certificates can be performed between automobiles manufactured by different automobile manufacturers, between ECUs and applications provided in each automobile, and between them and devices outside the automobiles.

Next, by using public key certificates issued by an OEMCA 200, it is possible to incorporate different in-vehicle CAs respectively into vehicle-mounted secure elements. Thereby, even if an in-vehicle CA is compromised, for example, due to analysis of a vehicle-mounted secure element, it is possible to not affect in-vehicle CAs of other vehicles. A public key certificate can also be issued from an in-vehicle CA to its own automobile, ECUs, and applications embedded in ECUs.

### <Hierarchical structure>

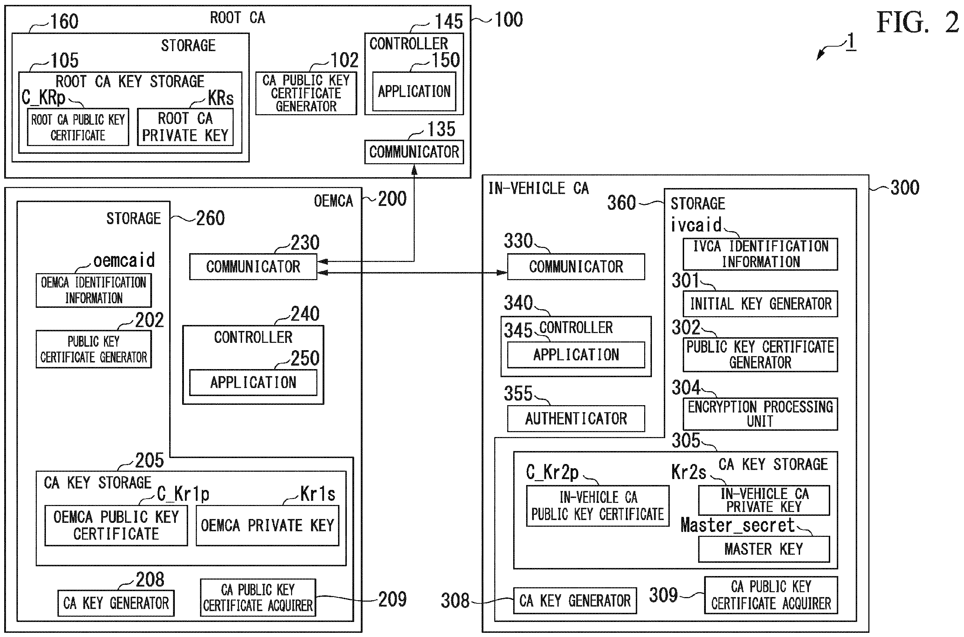

Fig. 2 is a diagram showing the root CA 100, the OEMCAs 200, and the in-vehicle CAs 300 that constitute the hierarchical structure 1 according to the embodiment.

### <root CA>

The root CA 100 includes a storage 160, a CA public key certificate generator 102, a communicator 135, and a controller 145.

The storage 160 includes a root CA key storage 105. The root CA key storage 105 stores a root CA public key certificate C_KRp and a root CA private key KRs.

The root CA public key certificate C_KRp is a public key certificate relating to a root CA public key KRp which is paired with the root CA private key KRs. The root CA public key certificate C_KRp and the root CA private key KRs are securely stored in the storage 160, for example, when the storage 160 is manufactured. The root CA key storage 105 is provided in a nonvolatile storage area, which cannot be accessed from the outside of the storage 160, in the storage area of the storage 160.

The CA public key certificate generator 102 issues an OEMCA public key certificate C_Krlp using the root CA private key KRs stored in the root CA key storage 105 and an OEMCA public key Kr1p transmitted by an OEMCA 200. The CA public key certificate generator 102 transmits the issued OEMCA public key certificate C_Krlp to the OEMCA 200 through the communicator 135.

The controller 145 controls each part of the root CA 100. The controller 145 includes an application 150.

### <OEMCA>

The OEMCA 200 includes a storage 260, a communicator 230, and a controller 240. An example of the storage 260 is a secure element such as a subscriber identity module (SIM).

The controller 240 controls each part of the OEMCA 200. The controller 240 includes an application 250.

The storage 260 includes a public key certificate generator 202, a CA key storage 205, a CA key generator 208, and a CA public key certificate acquirer 209.

The storage 260 stores OEMCA identification information oemcaid. The OEMCA identification information oemcaid is identification information unique to the OEMCA 200.

The public key certificate generator 202 issues an in-vehicle CA public key certificate C_Kr2p using an OEMCA private key Kr1s stored in the CA key storage 205.

The CA key storage 205 stores the OEMCA public key certificate C_Krlp and the OEMCA private key Kr1s. The OEMCA public key certificate C_Krlp is a public key certificate relating to an OEMCA public key Kr1p which is paired with the OEMCA private key Kr1s. The OEMCA public key certificate C_Krlp is acquired from the root CA 100 and is securely stored in the CA key storage 205 together with the OEMCA private key Kr1s.

The CA key generator 208 generates a pair of the OEMCA public key Kr1p and the OEMCA private key Kr1s and stores the OEMCA private key Kr1s in the CA key storage 205.

The CA public key certificate acquirer 209 requests the root CA 100 to issue the OEMCA public key certificate, and acquires the OEMCA public key certificate C_Krlp from the root CA 100. For example, the CA public key certificate acquirer 209 transmits a CA public key certificate issuance request including the OEMCA public key Kr1p generated by the CA key generator 208 to the root CA 100. Upon receiving the OEMCA public key certificate C_Krlp transmitted by the root CA 100, the CA public key certificate acquirer 209 stores the OEMCA public key certificate C_Krlp in the CA key storage 205.

### <In-vehicle CA>

The in-vehicle CA 300 includes a storage 360, a communicator 330, a controller 340, and an authenticator 355. The in-vehicle CA 300 is an example of an intermediate CA. An example of the storage 360 is a secure element such as an SIM.

The controller 340 controls each part of the in-vehicle CA 300. The controller 340 includes an application 345.

The storage 360 includes an initial key generator 301, a public key certificate generator 302, an encryption processing unit 304, a CA key storage 305, a CA key generator 308, and a CA public key certificate acquirer 309.

The storage 360 stores IVCA identification information ivcaid. The IVCA identification information ivcaid is identification information unique to the in-vehicle CA 300.

The initial key generator 301 generates an initial key of the ECU 420.

The public key certificate generator 302 issues a first ECU public key certificate using an in-vehicle CA private key Kr2s stored in the CA key storage 305.

The encryption processing unit 304 encrypts data and decrypts encrypted data.

The CA key storage 305 stores the in-vehicle CA public key certificate C_Kr2p, the in-vehicle CA private key Kr2s, and a master key Master_Secret. The in-vehicle CA public key certificate C_Kr2p is a public key certificate relating to an in-vehicle CA public key Kr2p which is paired with the in-vehicle CA private key Kr2s. The in-vehicle CA public key certificate C_Kr2p is acquired from the OEMCA 200 and is securely stored in the CA key storage 305 together with the in-vehicle CA private key Kr2s.

The CA key generator 308 generates a pair of the in-vehicle CA public key Kr2p and the in-vehicle CA private key Kr2s and stores the in-vehicle CA private key Kr2s in the CA key storage 305.

The CA public key certificate acquirer 309 requests the OEMCA 200 to issue the in-vehicle CA public key certificate C_Kr2p, and acquires the in-vehicle CA public key certificate C_Kr2p from the OEMCA 200. For example, the CA public key certificate acquirer 309 transmits a CA public key certificate issuance request including the in-vehicle CA public key Kr2p generated by the CA key generator 308 to the OEMCA 200. Upon receiving the in-vehicle CA public key certificate C_Kr2p transmitted by the OEMCA 200, the CA public key certificate acquirer 309 stores the in-vehicle CA public key certificate C_Kr2p in the CA key storage 305.

The communicator 135 of the root CA 100, the communicator 230 of the OEMCA 200, and the communicator 330 of the in-vehicle CA 300 communicate with each other. Communication between the communicator 135, the communicator 230, and the communicator 330 may be wireless or wired. For example, the communicator 135, the communicator 230, and the communicator 330 may communicate with each other via a wireless communication network such as a wireless LAN or a mobile phone network.

Alternatively, the communicator 135, the communicator 230, and the communicator 330 may perform communication directly by transmitting and receiving signals using a short-range wireless communication technology or may perform communication via the Internet, a fixed telephone network, a communication network such as a wired LAN or may be connected through a communication cable to perform communication.

The authenticator 355 performs authentication with the ECU 420.

### <Operations of root CA, OEMCA and in-vehicle CA>

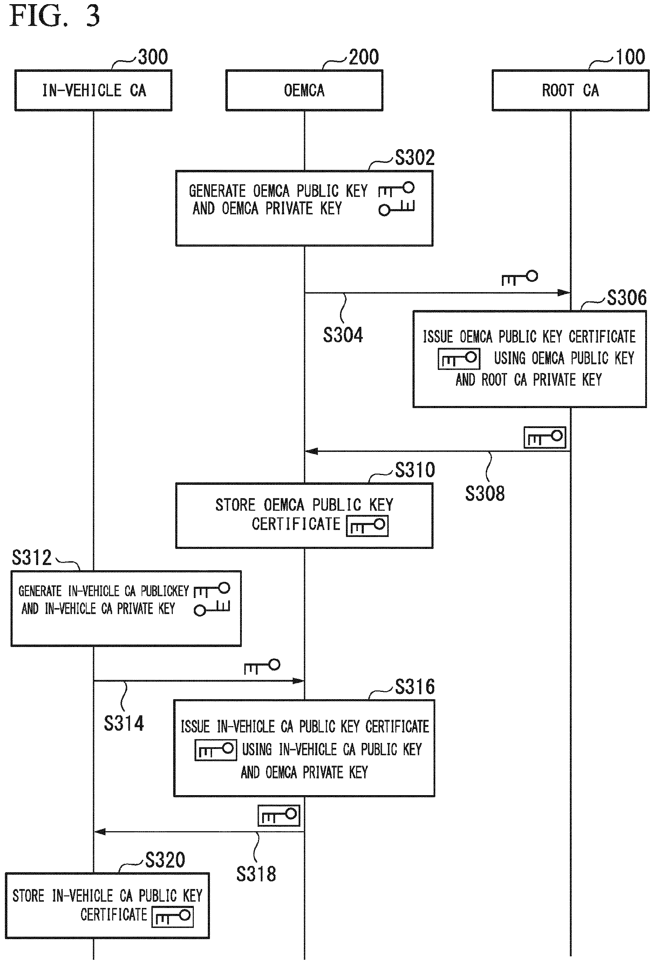

Fig. 3 is a sequence chart showing an example of an operation for issuing a public key certificate according to the embodiment. Fig. 3 shows a process in which the root CA 100 issues an OEMCA public key certificate to the OEMCA 200 and the OEMCA 200 issues an in-vehicle CA public key certificate to the in-vehicle CA 300.

(Step S302) In the OEMCA 200, the CA key generator 208 generates the OEMCA public key Kr1p and the OEMCA private key Kr1s.

(Step S304) In the OEMCA 200, the CA public key certificate acquirer 209 outputs a public key certificate issuance request including the OEMCA public key Kr1p generated by the CA key generator 208 to the communicator 230. The communicator 230 transmits a public key certificate issuance request to the root CA 100 to apply for issuance of a public key certificate from the root CA 100.

(Step S306) In the root CA 100, the CA public key certificate generator 102 issues the OEMCA public key certificate C_Krlp using the OEMCA public key Kr1p included in the public key certificate issuance request transmitted by the OEMCA 200 and the root CA private key KRs stored in the root CA key storage 105. Upon receiving the public key certificate issuance request from the OEMCA 200, the root CA 100 confirms the location of the OEMCA 200 or the like and then issues the OEMCA public key certificate C_Krlp using the OEMCA public key Kr1p and the root CA private key KRs stored in the root CA key storage 105.

An example of an electronic signature of the OEMCA public key Kr1p is encrypted data as a result of encrypting a digest of data including the OEMCA public key Kr1p and the OEMCA identification information oemcaid with the root CA private key KRs. Here, a hash value is used as an example of the digest. A public key certificate format of the X.509 standard specified in International Telecommunication Union - telecommunication (ITU-T) or the like is used as an example of the public key certificate format. The OEMCA public key Kr1p is stored at a predetermined position in the public key certificate format of the X.509 standard. The OEMCA identification information oemcaid is also stored at the position of "subject parameter: subject name" in the public key certificate format of the X.509 standard.

An example of a method of issuing the OEMCA public key certificate C_Krlp by the CA public key certificate generator 102 will be described below in detail. The CA public key certificate generator 102 calculates a hash value "hash" (Kr1p, oemcaid) of the data of the public key certificate format of the X.509 standard in which the OEMCA public key Kr1p and the OEMCA identification information oemcaid are stored. Next, the CA public key certificate generator 102 encrypts the hash value "hash" (Kr1p, oemcaid) with the root CA private key KRs stored in the root CA key storage 105 of the storage 160. This encrypted data KRs (hash (Kr1p, oemcaid)) is an electronic signature of the OEMCA public key Kr1p. Next, the CA public key certificate generator 102 constructs an OEMCA public key certificate C_Krlp "Kr1p, oemcaid, KRs (hash (Kr1p, oemcaid))" in the public key certificate format of the X.509 standard which includes the OEMCA public key Kr1p, the OEMCA identification information oemcaid, and the electronic signature KRs (hash (Kr1p, oemcaid)) of the OEMCA public key Kr1p.

(Step S308) In the root CA 100, the communicator 135 transmits the OEMCA public key certificate C_Krlp issued by the CA public key certificate generator 102 to the OEMCA 200.

(Step S310) In the OEMCA 200, the CA public key certificate acquirer 209 acquires the OEMCA public key certificate C_Krlp transmitted by the root CA 100. Then, the CA public key certificate acquirer 209 stores the OEMCA public key certificate C_Krlp in the CA key storage 205.

(Step S312) In the in-vehicle CA 300, the CA key generator 308 generates an in-vehicle CA public key Kr2p and an in-vehicle CA private key Kr2s.

(Step S314) In the in-vehicle CA 300, the CA public key certificate acquirer 309 outputs a public key certificate issuance request including the in-vehicle CA public key Kr2p generated by the CA key generator 308 to the communicator 330. The communicator 330 transmits a public key certificate request to the OEMCA 200 to apply for issuance of a public key certificate from the OEMCA 200.

(Step S316) In the OEMCA 200, the public key certificate generator 202 issues an in-vehicle CA public key certificate C_Kr2p using the in-vehicle CA public key Kr2p included in the public key certificate issuance request provided from the in-vehicle CA 300 and the OEMCA private key Kr1s stored in the CA key storage 205.

An example of the electronic signature of the in-vehicle CA public key Kr2p is encrypted data as a result of encrypting a digest of data including the in-vehicle CA public key Kr2p and the IVCA identification information ivcad with the OEMCA private key Kr1s. Here, a hash value is used as an example of the digest. A public key certificate format of the X.509 standard specified in ITU-T or the like is used as an example of the public key certificate format. The in-vehicle CA public key Kr2p is stored at a predetermined position in the public key certificate format of the X.509 standard. The IVCA identification information ivcaid is also stored at the position of "subject parameter: subject name" in the public key certificate format of the X.509 standard.

An example of a method of generating the in-vehicle CA public key certificate C_Kr2p in the storage 260 will be specifically described. In the storage 260, the public key certificate generator 202 calculates a hash value "hash" (Kr2p, ivcaid) of the data of the public key certificate format of the X.509 standard in which the in-vehicle CA public key Kr2p and the IVCA identification information ivcaid are stored. Next, the public key certificate generator 202 encrypts the hash value "hash" (Kr2p, ivcaid) with the OEMCA private key Kr1s stored in the CA key storage 205 of the storage 260. The encrypted data Kr1s (hash (Kr2p, ivcaid)) is an electronic signature of the in-vehicle CA public key Kr2p. Next, the public key certificate generator 202 constructs an in-vehicle CA public key certificate C_Kr2p "Kr2p, ivcaid, Kr1s (hash (Kr2p, ivcaid))" in the public key certificate format of the X.509 standard which includes the in-vehicle CA public key Kr2p, the IVCA identification information ivcaid, and the electronic signature Kr1s (hash (Kr2p, ivcaid)) of the in-vehicle CA public key Kr2p.

(Step S318) In the OEMCA 200, the communicator 230 transmits the in-vehicle CA public key certificate C_Kr2p issued by the public key certificate generator 202 to the in-vehicle CA 300.

(Step S320) In the in-vehicle CA 300, the CA public key certificate acquirer 309 acquires the in-vehicle CA public key certificate C_Kr2p transmitted by the OEMCA 200. Then, the CA public key certificate acquirer 309 stores the in-vehicle CA public key certificate C_Kr2p in the CA key storage 305.

In the sequence chart shown in Fig. 3, steps S312 to S320 are performed during a trusted process such as that of a factory line of the automobile manufacturer. This allows the OEMCA 200 to securely confirm the presence of the in-vehicle CA 300.

Alternatively, the storage 360 of the in-vehicle CA 300 may be constituted of an SIM. While the SIM is authenticated by an SIM application area maintenance server of a communication company, an application which has received a public key certificate issued from the OEMCA 200 over the air may be securely written to an application area in the SIM.

The description of the present embodiment will continue below with regard to the case in which the in-vehicle CA 300 is constructed, in a telecommunication unit (TCU), using an SIM of a communication module.

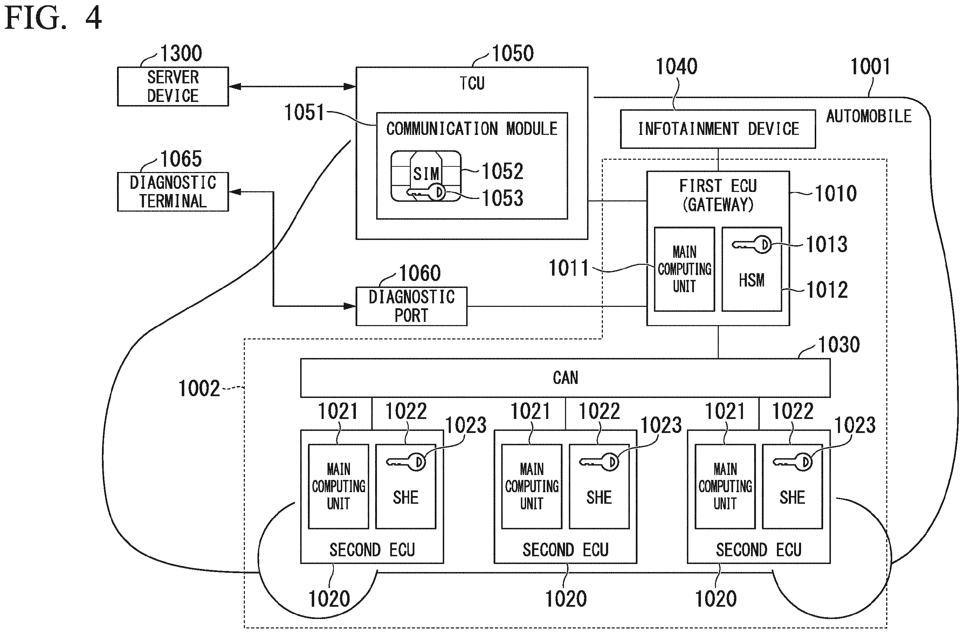

Fig. 4 is a diagram showing an exemplary configuration of an automobile 1001 according to the present embodiment.

In Fig. 4, the automobile 1001 includes a first ECU 1010 and a plurality of second ECUs 1020. The first ECU 1010 and the second ECUs 1020 are vehicle-mounted computers provided in the automobile 1001. The first ECU 1010 is an ECU having a gateway function among the ECUs mounted in the automobile 1001. The second ECUs 1020 are ECUs having functions such as engine control among the ECUs mounted in the automobile 1001. Examples of the second ECUs 1020 include an ECU having an engine control function, an ECU having a steering wheel control function, and an ECU having a brake control function.

The first ECU 1010 and the plurality of second ECUs 1020 are connected to a controller area network (CAN) 1030 provided in the automobile 1001. The CAN 1030 is a communication network. The CAN is known as one of the communication networks installed in vehicles.

The first ECU 1010 exchanges data with each second ECU 1020 via the CAN 1030. Each of the second ECUs 1020 exchanges data with another second ECU 1020 via the CAN 1030.

It is to be noted that a communication network other than the CAN may be provided in the automobile 1001 as a communication network installed in the vehicle and data exchange between the first ECU 1010 and the second ECUs 1020 and data exchange between the second ECUs 1020 may be performed via the communication network other than the CAN. For example, a local interconnect network (LIN) may be provided in the automobile 1001. Both the CAN and the LIN may also be provided in the automobile 1001. Further, a second ECU(s) 1020 connected to the LIN may be provided in the automobile 1001. The first ECU 1010 may also be connected to both the CAN and the LIN. Furthermore, the first ECU 1010 may exchange data with a second ECU 1020 connected to the CAN via the CAN and exchange data with a second ECU 1020 connected to the LIN via the LIN. The second ECUs 1020 may also exchange data with each other via the LIN.

The automobile 1001 includes a diagnostic port 1060. For example, an on-board diagnostics (OBD) port may be used as the diagnostic port 1060. A diagnostic terminal 1065 can be connected to the diagnostic port 1060. The diagnostic port 1060 is connected to the first ECU 1010. The first ECU 1010 and the diagnostic terminal 1065 connected to the diagnostic port 1060 exchange data with each other via the diagnostic port 1060.

The automobile 1001 includes an infotainment device 1040. Examples of the infotainment device 1040 include those having a navigation function, a position information service function, a multimedia playback function such as for music and movies, a voice communication function, a data communication function, and an internet connection function. The infotainment device 1040 is connected to the first ECU 1010. The first ECU 1010 transmits information input from the infotainment device 1040 to the second ECU 1020.

The automobile 1001 includes a TCU 1050. The TCU 1050 is a communication device. The TCU 1050 includes a communication module 1051. The communication module 1051 performs wireless communication using a wireless communication network. The communication module 1051 includes an SIM 1052. The SIM 1052 is an SIM in which information for using the wireless communication network is written. The SIM 1052 includes a storage 1053 that stores data such as keys. The communication module 1051 can perform wireless communication by connecting to a wireless communication network using the SIM 1052. An embedded subscriber identity module (eSIM) may also be used as the SIM 1052. The SIM and the eSIM are tamper-resistant. The SIM and the eSIM are examples of secure elements. The secure element is tamper-resistant.

The TCU 1050 is connected to the first ECU 1010. The first ECU 1010 exchanges data with the communication module 1051 of the TCU 1050.

In the configuration of Fig. 4, the first ECU 1010 and the TCU 1050 are connected directly to each other to allow data exchange between the first ECU 1010 and the communication module 1051, but the present invention is not limited to this. For example, the TCU 1050 may be connected to the infotainment device 1040 and the first ECU 1010 may exchange data with the communication module 1051 of the TCU 1050 via the infotainment device 1040. Alternatively, instead of the diagnostic terminal 1065, the TCU 1050 may be connected to the diagnostic port 1060 and the first ECU 1010 may exchange data with the communication module 1051 of the TCU 1050 connected to the diagnostic port 1060 via the diagnostic port 1060. Alternatively, the first ECU 1010 may include the communication module 1051 including the SIM 1052. When the first ECU 1010 includes the communication module 1051 including the SIM 1052, the automobile 1001 may not include the TCU 1050.

The first ECU 1010 includes a main computing unit 1011 and a hardware security module (HSM) 1012. The main computing unit 1011 executes a computer program for realizing the functions of the first ECU 1010. The HSM 1012 has an encryption processing function or the like. The HSM 1012 is tamper-resistant. The HSM 1012 is an example of a secure element (SE). The HSM 1012 includes a storage 1013 for storing data such as keys. The main computing unit 1011 uses the HSM 1012.

The second ECU 1020 includes a main computing unit 1021 and a secure hardware extension (SHE) 1022. The main computing unit 1021 executes a computer program for realizing the functions of the second ECU 1020. The SHE 1022 has an encryption processing function or the like. The SHE 1022 is tamper-resistant. The SHE 1022 is an example of a secure element. The SHE 1022 includes a storage 1023 for storing data such as keys. The main computing unit 1021 uses the SHE 1022.

A vehicle-mounted computer system 1002 provided in the automobile 1001 is constructed by connecting the first ECU 1010 and the plurality of second ECUs 1020 to the CAN 1030. The first ECU 1010 has a gateway function and monitors communication between the inside and the outside of the vehicle-mounted computer system 1002. In the present embodiment, the vehicle-mounted computer system 1002 functions as a vehicle-mounted control system of the automobile 1001.

In the following description, the first ECU 1010 and the second ECU 1020 are simply referred to as ECUs unless specifically distinguished.

A server device 1300 transmits and receives data to and from the communication module 1051 of the TCU 1050 of the automobile 1001 via a communication line. The server device 1300 transmits and receives data to and from the communication module 1051 of the TCU 1050 of the automobile 1001 via a wireless communication network used by the communication module 1051. Alternatively, the server device 1300 may transmit and receive data to and from the communication module 1051 via the wireless communication network and a communication network such as the Internet. For example, a dedicated line such as a virtual private network (VPN) line may also be connected between the server device 1300 and the communication module 1051 and data may be transmitted and received therebetween via the dedicated line. For example, a dedicated line such as a VPN line may be provided by a wireless communication network corresponding to the SIM 1052.

### <First ECU>

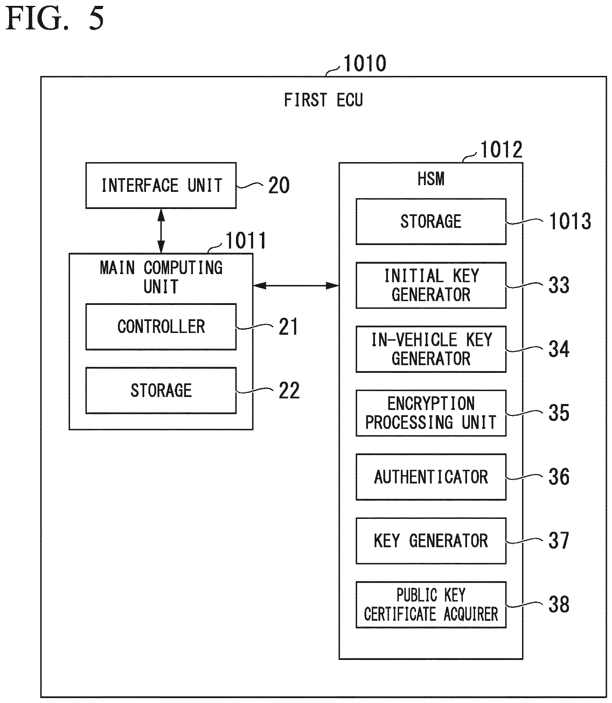

Fig. 5 is a diagram showing an exemplary configuration of the first ECU 1010. In Fig. 5, the first ECU 1010 includes a main computing unit 1011, an HSM 1012, and an interface unit 20.

The main computing unit 1011 includes a controller 21 and a storage 22. The HSM 1012 includes a storage 1013, an initial key generator 33, an in-vehicle key generator 34, an encryption processing unit 35, an authenticator 36, a key generator 37, and a public key certificate acquirer 38.

The interface unit 20 includes an interface for transmitting and receiving data via the CAN 1030, an interface for transmitting and receiving data to and from the infotainment device 1040, an interface for transmitting and receiving data to and from the TCU 1050, and an interface for transmitting and receiving data via the diagnostic port 1060. The main computing unit 1011 transmits and receives data to and from devices other than the first ECU 1010 via the interface unit 20.

In the interface unit 20, an interface for transmitting and receiving data via the CAN 1030 may include a plurality of ports connected to the CAN 1030. This allows the first ECU 1010 to transmit and receive data to and from the plurality of second ECUs 1020 via the CAN 1030 at the same time.

The controller 21 controls the first ECU 1010. The storage 22 stores data. The storage 1013 stores data such as keys. The initial key generator 33 generates initial keys of the second ECUs 1020. The in-vehicle key generator 34 generates an in-vehicle key which is a key used inside the automobile 1001. The encryption processing unit 35 encrypts data and decrypts encrypted data. The authenticator 36 performs authentication processing with the TCU 1050. The authenticator 36 also performs authentication processing with the second ECU 1020. The key generator 37 generates a pair of a first ECU public key and a first ECU private key and stores the first ECU private key in the storage 1013. The public key certificate acquirer 38 requests issuance of a first ECU public key certificate from the TCU 1050 and acquires the first ECU public key certificate from the TCU 1050. For example, the public key certificate acquirer 38 transmits a public key certificate issuance request including the first ECU public key generated by the key generator 37 to the TCU 1050. Upon receiving the first ECU public key certificate transmitted by the TCU 1050, the public key certificate acquirer 38 stores the first ECU public key certificate in the storage 1013.

### <Second ECU>

Fig. 6 is a diagram showing an exemplary configuration of the second ECU 1020. In Fig. 6, the second ECU 1020 includes a main computing unit 1021, an SHE 1022, and an interface unit 40. The main computing unit 1021 includes a controller 41 and a storage 42. The SHE 1022 includes a storage 1023, an encryption processing unit 53, an authenticator 54, a key generator 55, and a public key certificate acquirer 56.

The interface unit 40 includes an interface for transmitting and receiving data via the CAN 1030. The main computing unit 1021 exchanges data with devices other than the second ECU 1020 via the interface unit 40.

The controller 41 controls the second ECU 1020. The storage 42 stores data. The storage 1023 stores data such as keys. The encryption processing unit 53 encrypts data and decrypts encrypted data. The authenticator 54 performs authentication processing with the TCU 1050. The authenticator 54 also performs authentication processing with the first ECU 1010. The key generator 55 generates a pair of a second ECU public key and a second ECU private key and stores the second ECU private key in the storage 1023. The public key certificate acquirer 56 requests issuance of a second ECU public key certificate from the TCU 1050 and acquires the second ECU public key certificate from the TCU 1050. For example, the public key certificate acquirer 56 transmits a public key certificate issuance request including the second ECU public key generated by the key generator 55 to the TCU 1050. Upon receiving the second ECU public key certificate transmitted by the TCU 1050, the public key certificate acquirer 56 stores the second ECU public key certificate in the storage 1023.

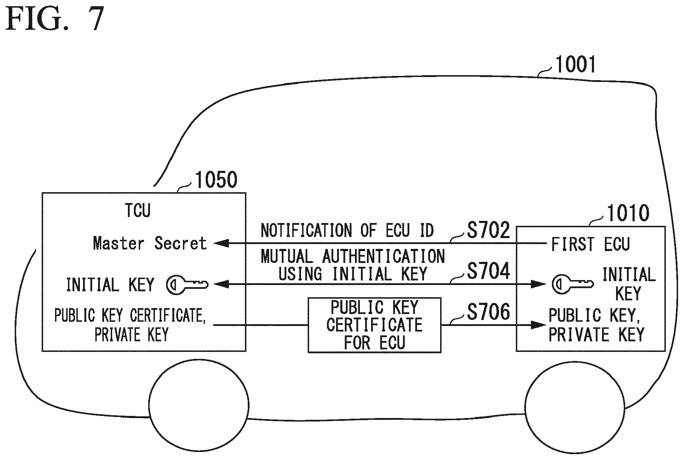

Next, an example of a method of issuing a public key certificate according to an embodiment will be described with reference to Fig. 7. Here, the case in which the TCU 1050 issues a public key certificate to the first ECU 1010 will be described as an example. It is to be noted that the present invention can also be applied to the case in which the TCU 1050 issues a public key certificate to a second ECU 1020.

(Step S702) The first ECU 1010 transmits an ECU_ID of the first ECU 1010 to the TCU 1050.

(Step S704) Upon receiving the ECU_ID of the first ECU 1010 transmitted by the first ECU 1010, the TCU 1050 performs mutual authentication with the first ECU 1010 using an initial key (= "digest (Master_Secret, ECU_ID)") generated from both the ECU_ID of the first ECU 1010 and a master key (Master_Secret). In the present embodiment, a challenge/response authentication method is used as an example of this mutual authentication method.

In the challenge/response authentication method, a challenge value (for example, a random number generated by the authenticator 355 of the SIM 1052 of the TCU 1050) is sent from one side (the authenticator 355) to the other side (the authenticator 36 of the HSM 1012 of the first ECU 1010). The authenticator 36 of the HSM 1012 of the first ECU 1010 encrypts the challenge value with an initial key stored in the storage 1013 and sends the encrypted data of the challenge value to the authenticator 355 of the SIM 1052 of the TCU 1050 as a response value. The authenticator 355 of the SIM 1052 of the TCU 1050 decrypts the response value with the initial key and checks whether or not the decryption result matches the challenge value. If the checking of the response value passes, authentication in one direction (the direction in which the SIM 1052 of the TCU 1050 authenticates the first ECU 1010) succeeds. The same is performed for the other direction (the direction in which the first ECU 1010 authenticates the SIM 1052 of the TCU 1050) and, if the checking of the response value passes, authentication in the other direction (the direction in which the first ECU 1010 authenticates the SIM 1052 of the TCU 1050) succeeds. If the authentication succeeds in both directions, the mutual authentication between the SIM 1052 of the TCU 1050 and the first ECU 1010 succeeds, and if the authentication fails in either direction, the mutual authentication between the SIM 1052 of the TCU 1050 and the first ECU 1010 fails.

(Step S706) If the authentication of the first ECU 1010 succeeds, a public key certificate is issued from the TCU 1050 to the first ECU 1010.

### <Process of writing ECU initial key to ECU>

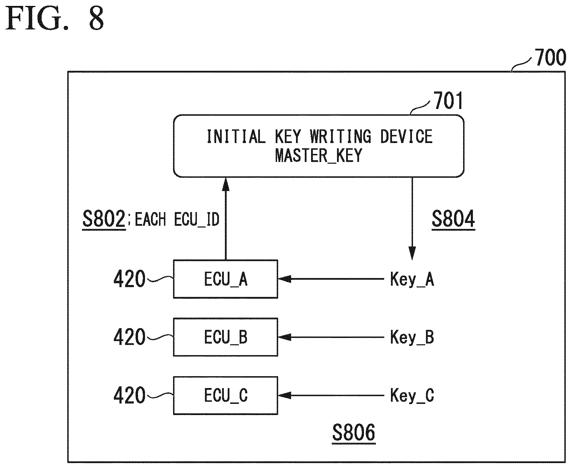

A process of writing ECU initial keys to the first ECU 1010 and the second ECUs 1020 will be described with reference to Fig. 8. In Fig. 8, the first ECU 1010 and the second ECUs 1020 are referred to as ECUs 420.

In Fig. 8, an initial key writing device 701 is installed in a room 700 in a manufacturing factory of ECUs 420. The room 700 is a room where security (safety) of information is secured. The initial key writing device 701 has a master key (MASTER_KEY) Master_Secret. The master key Master_Secret is set in the initial key writing device 701 in advance. The setting of the master key Master_Secret in the initial key writing device 701 is securely performed. The master key Master_Secret of the initial key writing device 701 is the same as the master key Master_Secret stored in the storage 1013 of the HSM 1012 of the first ECU 1010 of the automobile 1001. The master key Master_Secret is securely managed.

It is to be noted that the master key Master_Secret is not necessarily stored in the HSM 1012 of the first ECU 1010.

The initial key writing device 701 has ECU connection interfaces for exchanging data with ECUs 420. The initial key writing device 701 exchanges data with the ECUs 420 connected to the ECU connection interfaces. Here, it is assumed that the initial key writing device 701 has three ECU connection interfaces and thus can be simultaneously connected to three second ECUs 1020 through the ECU connection interfaces.

In Fig. 8, three ECUs 420 are shown as the ECUs 420 mounted in the automobile 1001. The three ECUs 420 will be referred to as ECU_A_420, ECU_B_420, and ECU_C_420. Here, a description will be provided with reference to the ECU_A_420, ECU_B_420, and ECU_C_420 as an example.

The initial key writing device 701 is simultaneously connected to the ECU_A_420, the ECU_B_420, and the ECU_C_420 through the ECU connection interfaces.

(Step S802) Each of the ECU_A_420, the ECU_B_420, and the ECU_C_420 transmits its own ECU identifier (ECU_ID) to the initial key writing device 701. Specifically, the ECU_A_420 transmits an ECU identifier ECU_ID_A to the initial key writing device 701. The ECU_B_420 transmits an ECU identifier ECU_ID_B to the initial key writing device 701. The ECU_C_420 transmits an ECU identifier ECU_ID_C to the initial key writing device 701.

For example, an identifier which is embedded in a semiconductor integrated circuit such as an LSI which is hardware constituting the ECU 420 when it is manufactured may be used as the ECU identifier. For example, an identifier embedded in an LSI of a microcomputer of the ECU 420 may be used as the ECU identifier.

(Step S804) The initial key writing device 701 generates an ECU initial key using the master key Master_Secret and the ECU identifier. Specifically, the initial key writing device 701 generates an ECU initial key Key_A of the ECU_A_420 using the master key Master_Secret and the ECU identifier ECU_ID_A of the ECU_A_420. The initial key writing device 701 generates an ECU initial key Key_B of the ECU_B_420 using the master key Master_Secret and the ECU identifier ECU_ID_B of the ECU_B_420. The initial key writing device 701 generates an ECU initial key Key_C of the ECU_C_420 using the master key Master_Secret and the ECU identifier ECU_ID_C of the ECU_C_420.

Examples 1 and 2 of the method of generating an ECU initial key will be described.

### (Example 1 of method of generating ECU initial key)

Example 1 of the method of generating an ECU initial key uses a hash function. For example, a hash value may be calculated using connection data of the ECU identifier and the master key Master_Secret as an input value and the calculated hash value may be used as the ECU initial key.

### (Example 2 of the method of generating ECU initial key)

Example 2 of the method of generating an ECU initial key uses an exclusive OR operation. For example, an exclusive OR operation between the master key Master_Secret and the ECU identifier may be performed and the resulting value of the operation "master key Master_Secret xor ECU identifier" may be used as the ECU initial key. Here, "A xor B" is the exclusive OR of A and B.

(Step S806) The initial key writing device 701 writes the generated ECU initial key to the corresponding second ECU 1020. Specifically, the initial key writing device 701 writes the ECU initial key Key_A to the ECU_A_420. The initial key writing device 701 writes the ECU initial key Key_B to the ECU_B_420. The initial key writing device 701 writes the ECU initial key Key_C to the ECU_C_420.

The ECU_A_420, the ECU_B_420, and the ECU_C_420 are mounted in the automobile 1001 after the ECU initial keys are written thereto.

### <Example 1 of distribution of in-vehicle common key>

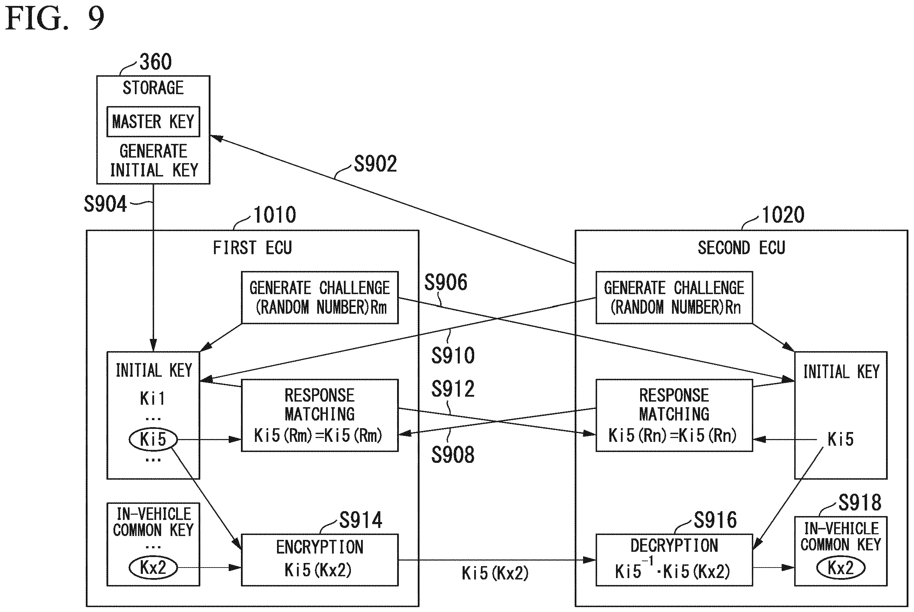

Example 1 of distribution of an in-vehicle common key according to the embodiment will be described with reference to Fig. 9. Fig. 9 shows a method of distributing an in-vehicle common key to the second ECU 1020 in the automobile 1001.

The storage 1013 in the HSM 1012 of the first ECU (master ECU) 1010 stores the initial key of the second ECU 1020 already mounted in the automobile 1001. The storage 1013 also stores the latest in-vehicle common key Kx2. The in-vehicle common key Kx2 is the latest in-vehicle common key distributed in the past to the second ECU 1020 already mounted in the automobile 1001.

Here, a description will be provided with regard to one second ECU 1020 installed in the automobile 1001. The SHE 1022 of the second ECU 1020 stores an initial key Ki5 of the second ECU 1020 in the storage 1023. The second ECU 1020 has its own identifier ECU_ID. The storage 360 of the in-vehicle CA 300 stores the master key in the CA key storage 305. The master key stored in the CA key storage 305 of the storage 360 is the same as the master key used together with the identifier ECU_ID of the second ECU 1020 when generating the initial key Ki5 stored in the storage 1023 of the second ECU 1020.

(Step S902) The second ECU 1020 provides its own identifier ECU_ID to the storage 360 when power is turned on for the first time after the second ECU 1020 is mounted in the automobile 1001. The identifier ECU_ID of the second ECU 1020 is transmitted from the second ECU 1020 to the communication module 1051 via the first ECU 1010. The communication module 1051 provides the received identifier ECU_ID of the second ECU 1020 to the storage 360.

(Step S904) The initial key generator 301 acquires the master key from the CA key storage 305 and uses the acquired master key and the identifier ECU_ID of the second ECU 1020 to generate the initial key Ki5 of the second ECU 1020. The communicator 330 transmits a pair of the initial key Ki5 of the second ECU 1020 generated by the initial key generator 301 and the identifier ECU_ID of the second ECU 1020 to the first ECU 1010.

The first ECU 1010 provides the received pair of the initial key Ki5 of the second ECU 1020 and the identifier ECU_ID of the second ECU 1020 to the HSM 1012. The HSM 1012 stores the initial key Ki5 of the second ECU 1020 in the storage 1013 in association with the identifier ECU_ID of the second ECU 1020. As a result, the first ECU 1010 shares the initial key Ki5 of the second ECU 1020 with the second ECU 1020.

The method of generating the initial key of the second ECU 1020 is predetermined. Examples 1 and 2 of the method of generating the initial key of the second ECU 1020 will be described below.

### (Example 1 of method of generating initial key of second ECU 1020)

Example 1 of the method of generating the initial key of the second ECU 1020 uses a hash function. For example, a hash value may be calculated using connection data of the identifier ECU_ID of the second ECU 1020 and the master key as an input value and the calculated hash value may be used as the initial key of the second ECU 1020.

### (Example 2 of method of generating initial key of second ECU 1020)

Example 2 of the method of generating the initial key of the second ECU 1020 uses an exclusive OR operation. For example, an exclusive OR operation between the master key and the identifier ECU_ID of the second ECU 1020 may be performed and the resulting value of the operation "master key xor identifier ECU_ID" may be used as the initial key of the second ECU 1020. Here, "A xor B" is the exclusive OR of A and B.

(Step S906) The HSM 1012 of the first ECU 1010 generates a random number Rm and sets the generated random number Rm as a challenge value. The first ECU 1010 transmits the challenge value Rm to the second ECU 1020.

(Step S908) The second ECU 1020 provides the challenge value Rm received from the first ECU 1010 to the SHE 1022. The SHE 1022 of the second ECU 1020 encrypts the challenge value Rm with the initial key Ki5 of the second ECU 1020 stored in the storage 1023 to generate encrypted data Ki5(Rm). The second ECU 1020 transmits the encrypted data Ki5(Rm) to the first ECU 1010 as a response value. The first ECU 1010 provides the received response value Ki5(Rm) to the HSM 1012.

The HSM 1012 performs a response matching process on the response value Ki5(Rm). In the response matching process, the HSM 1012 verifies the response value Ki5(Rm) using the initial key Ki5 of the second ECU 1020 stored in the storage 1013. Examples of the method of verifying the response value Ki5(Rm) include examples 1 and 2 of the verification method shown below.

### (Example 1 of verification method)

The HSM 1012 encrypts the challenge value Rm with each of a plurality of initial keys Ki 1, ..., Ki5, ... stored in the storage 1013 and determines whether or not each encryption result matches the response value Ki5(Rm) . The verification of the response value Ki5(Rm) succeeds if the determination result is that there is only one encryption result matching the response value Ki5(Rm). On the other hand, the validation of the response value Ki5(Rm) fails if the determination result is that there is no encryption result matching the response value Ki5(Rm) or that there are a plurality of encryption results matching the response value Ki5(Rm).

### (Example 2 of verification method)

The HSM 1012 decrypts the response value Ki5(Rm) with each of the plurality of initial keys Ki 1, ..., Ki5, ... stored in the storage 1013 and determines whether or not each decryption result matches the challenge value Rm. The verification of the response value Ki5(Rm) succeeds if the determination result is that there is only one decryption result matching the challenge value Rm. On the other hand, the verification of the response value Ki5(Rm) fails if the determination result is that there is no decryption result matching the challenge value Rm or that there are a plurality of decryption results matching the challenge value Rm.

If the verification of the response value Ki5(Rm) succeeds, the process proceeds to the subsequent step. On the other hand, if the verification of the response value Ki5(Rm) fails, the process of Fig. 9 ends. If the verification of the response value Ki5(Rm) fails, predetermined error processing may be performed.

(Step S910) The SHE 1022 of the second ECU 1020 generates a random number Rn and sets the generated random number Rn as a challenge value. The second ECU 1020 transmits the challenge value Rn to the master ECU 1010.

(Step S912) The first ECU 1010 provides the challenge value Rn received from the second ECU 1020 to the HSM 1012. The HSM 1012 generates encrypted data Ki5(Rn) by encrypting the challenge value Rn with the initial key Ki5 of the second ECU 1020 used when the verification of the response value Ki5(Rm) succeeds in the step S908. The first ECU 1010 transmits the encrypted data Ki5(Rn) as a response value to the second ECU 1020. The second ECU 1020 provides the received response value Ki5(Rn) to the SHE 1022.

The SHE 1022 performs a response matching process on the response value Ki5(Rn). In the response matching process, the SHE 1022 verifies the response value Ki5(Rn) using the initial key Ki5 of the second ECU 1020 stored in the storage 1023. Examples of the method of verifying the response value Ki5(Rn) include the same methods as those of the examples 1 and 2 of the verification method described above.

If the verification of the response value Ki5(Rn) succeeds, the process proceeds to the subsequent step. On the other hand, if the verification of the response value Ki5(Rn) fails, the process of Fig. 9 ends. If the verification of the response value Ki5(Rn) fails, predetermined error processing may be performed.

(Step S914) The HSM 1012 of the first ECU 1010 encrypts the in-vehicle common key Kx2 stored in the storage 1013 using the initial key Ki5 of the second ECU 1020 used when the verification of the response value Ki5(Rn) succeeds in the step S908 to generate an in-vehicle exchange key Ki5(Kx2). The first ECU 1010 transmits the in-vehicle exchange key Ki5(Kx2) to the second ECU 1020. The second ECU 1020 provides the received in-vehicle exchange key Ki5(Kx2) to the SHE 1022.

(Step S916) The SHE 1022 of the second ECU 1020 decrypts the encrypted in-vehicle common key Ki5(Kx2) with the initial key Ki5 of the second ECU 1020 stored in the storage 1023. An in-vehicle common key Kx2 is obtained as the decryption result.

(Step S918) The SHE 1022 of the second ECU 1020 stores the in-vehicle common key Kx2 of the decryption result in the storage 1023.

In example 1 of the communication method described above, the storage 360 has a master key having a relatively high level of demand for key security and uses the master key to generate initial keys of the second ECUs 1020. Also, the HSM 1012 performs processing for distributing the in-vehicle common key having a relatively high level of demand for high-speed key distribution.

### <Second embodiment>

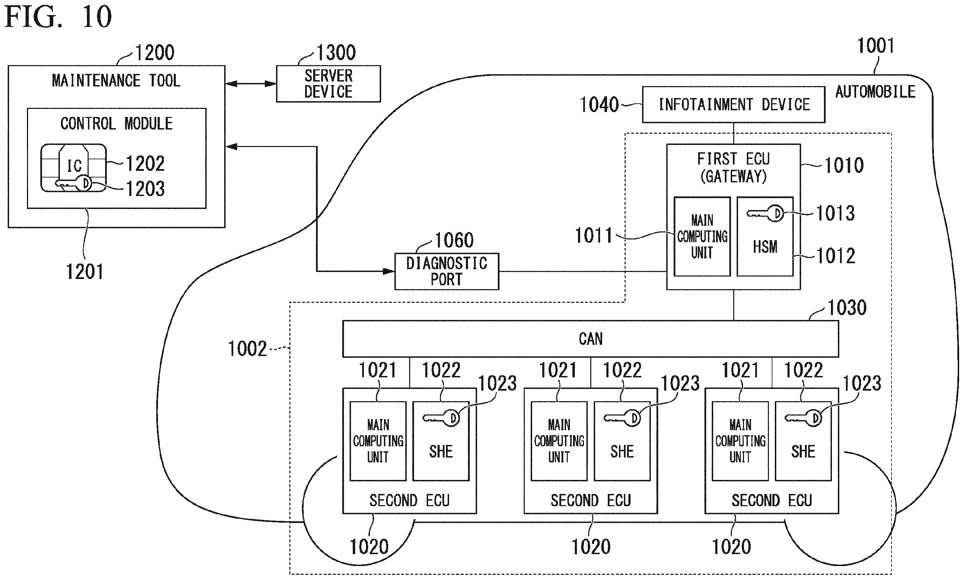

Fig. 10 is a diagram showing an exemplary configuration of an automobile 1001 according to the present embodiment. The present embodiment will be described with reference to the case in which a public key certificate is issued from a maintenance tool outside the automobile to a first ECU 1010 and second ECUs 1020 as an example.

In Fig. 10, portions corresponding to those in Fig. 4 are denoted by the same reference signs and descriptions thereof will be omitted. In the exemplary configuration of the automobile 1001 shown in Fig. 10, a maintenance tool 1200 can be connected to a diagnostic port 1060. The first ECU 1010 and the maintenance tool 1200 connected to the diagnostic port 1060 exchange data via the diagnostic port 1060. The maintenance tool 1200 may have the function of a diagnostic terminal of the related art connected to an OBD port.

The maintenance tool 1200 includes a control module 1201. The control module 1201 includes an integrated circuit (IC) chip 1202. The IC chip 1202 includes a storage 1203 that stores data such as keys. The IC chip 1202 is tamper-resistant. The IC chip 1202 is an example of a secure element. The IC chip 1202 is a type of computer and realizes a desired function by a computer program.

The configuration of the in-vehicle CA 300 shown in Fig. 2 can be applied as the configuration of a CA constructed using the IC chip 1202 in the maintenance tool 1200.

A server device 1300 transmits and receives data to and from the maintenance tool 1200 via a communication line. For example, a dedicated line such as a VPN line may be connected between the server device 1300 and the maintenance tool 1200 and data may be transmitted and received therebetween via the dedicated line.

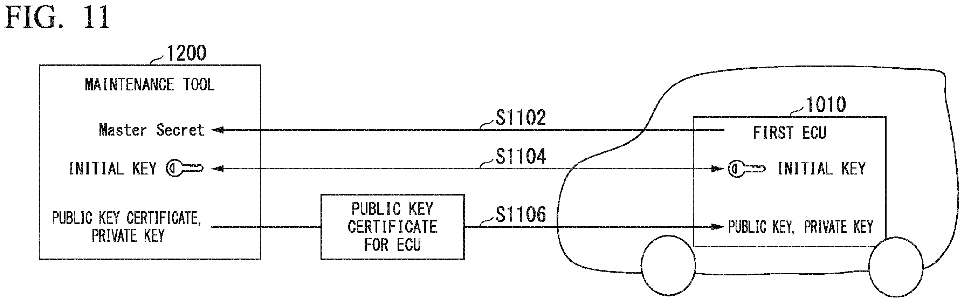

Next, an example of a method of issuing a public key certificate according to an embodiment will be described with reference to Fig. 11. Here, a description will be provided with regard to the case in which the maintenance tool 1200 issues a public key certificate to the first ECU 1010 as an example. It is to be noted that the present invention can also be applied to the case in which the maintenance tool 1200 issues a public key certificate to a second ECU 1020.

(Step S1102) The first ECU 1010 transmits an ECU_ID of the first ECU 1010 to the maintenance tool 1200.

(Step S1104) Upon receiving the ECU_ID of the first ECU 1010 transmitted by the first ECU 1010, the maintenance tool 1200 performs mutual authentication with the first ECU 1010 using an initial key (= "digest (Master_Secret, ECU_ID)") generated from the ECU_ID of the first ECU 1010 and the master key (Master_Secret).

(Step S1106) If the authentication of the first ECU 1010 succeeds, a public key certificate is issued from the maintenance tool 1200 to the first ECU 1010.

### <Third embodiment>

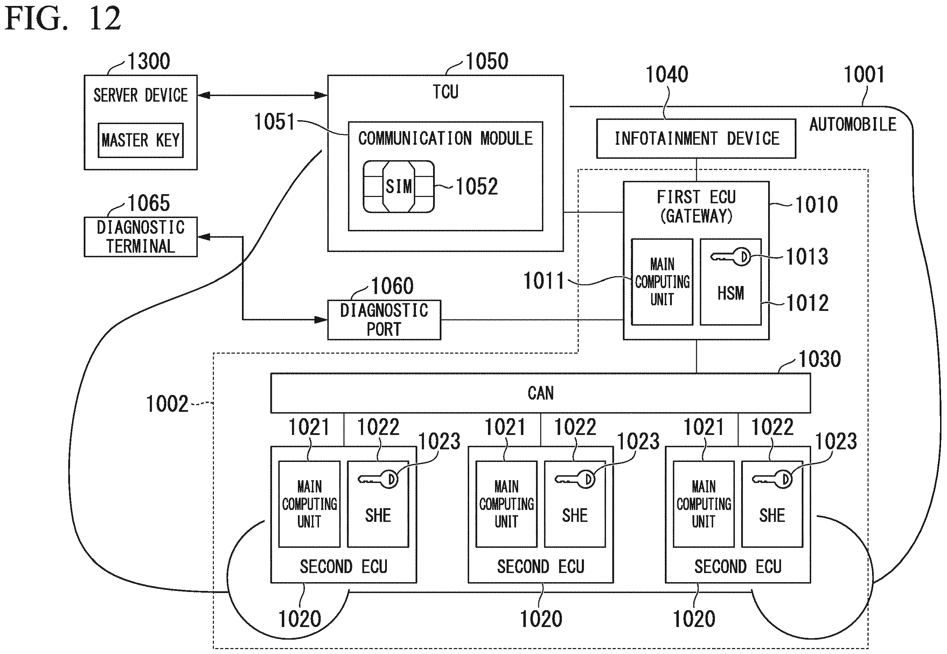

Fig. 12 is a diagram showing an exemplary configuration of an automobile 1001 according to the present embodiment. The present embodiment will be described with reference to the case in which a public key certificate is issued from a server device 1300 outside the automobile to a first ECU 1010 as an example.

In Fig. 12, portions corresponding to those in Fig. 4 are denoted by the same reference signs and descriptions thereof will be omitted. In the exemplary configuration of the automobile shown in Fig. 12, an SIM 1052 of a communication module 1051 of a TCU 1050 does not have a storage 1053 that stores data such as keys.

The configuration of the in-vehicle CA 300 in Fig. 2 can be applied as the configuration of a CA disposed in the server device 1300.

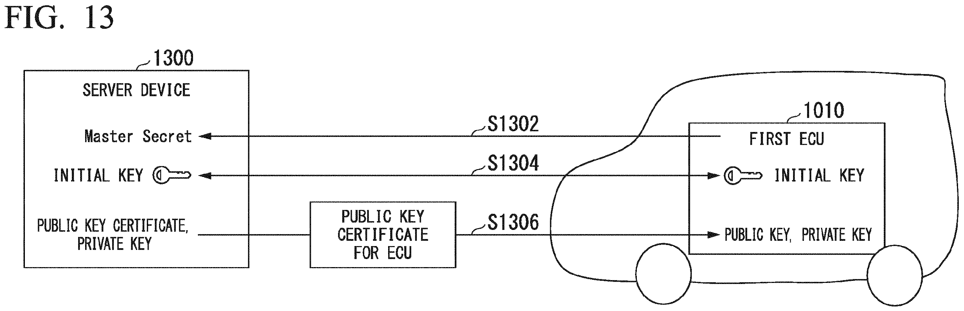

Next, an example of a method of issuing a public key certificate according to an embodiment will be described with reference to Fig. 13. Here, a description will be provided with regard to the case in which the server device 1300 issues a public key certificate to the first ECU 1010 as an example. It is to be noted that the present invention can also be applied to the case in which the server device 1300 issues a public key certificate to a second ECU 1020.

(Step S1302) The first ECU 1010 transmits an ECU_ID of the first ECU 1010 to the server device 1300.

(Step S1304) Upon receiving the ECU_ID of the first ECU 1010 transmitted by the first ECU 1010, the server device 1300 performs mutual authentication with the first ECU 1010 using an initial key (= "digest (Master_Secret, ECU_ID)") generated from the ECU_ID of the first ECU 1010 and the master key (Master_Secret).

(Step S 1306) If the authentication of the first ECU 1010 succeeds, a public key certificate is issued from the server device 1300 to the first ECU 1010.

### <Fourth embodiment>

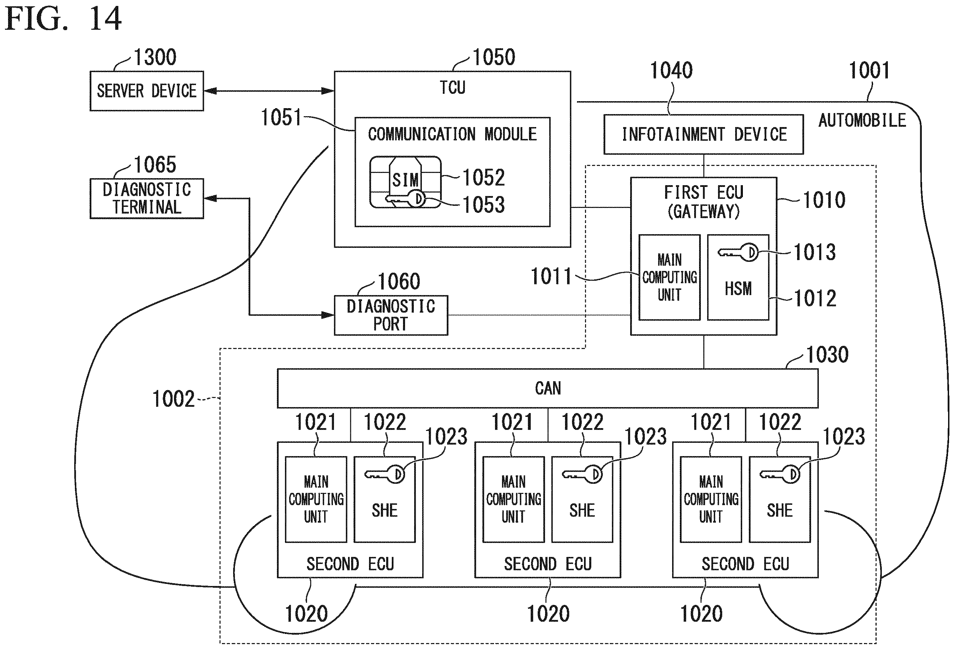

Fig. 14 is a diagram showing an exemplary configuration of an automobile 1001 according to the present embodiment. The present embodiment will be described with reference to the case in which a public key certificate is issued from a first ECU 1010 to a second ECU 1020 as an example.

In Fig. 14, portions corresponding to those in Fig. 4 are denoted by the same reference signs and descriptions thereof will be omitted.

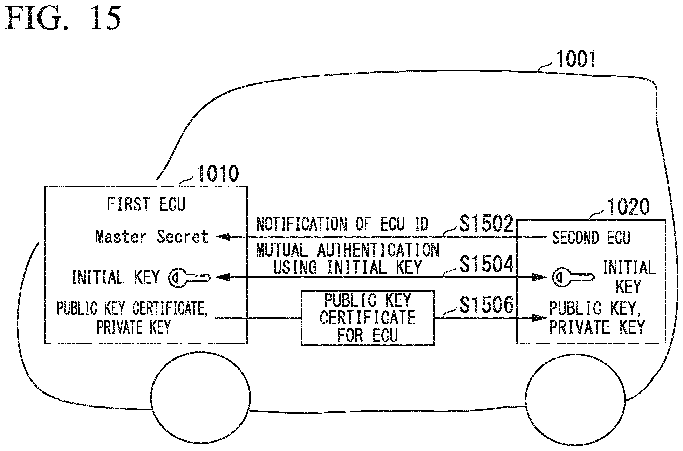

Next, an example of a method of issuing a public key certificate according to an embodiment will be described with reference to Fig. 15. Here, a description will be provided with regard to the case in which the first ECU 1010 issues a public key certificate to the second ECU 1020 as an example.

(Step S1502) The second ECU 1020 transmits an ECU_ID of the second ECU 1020 to the first ECU 1010.

(Step S1504) Upon receiving the ECU_ID of the second ECU 1020 transmitted by the second ECU 1020, the first ECU 1010 performs mutual authentication with the second ECU 1020 using an initial key (= "digest (Master_Secret, ECU_ID)") generated from the ECU_ID of the second ECU 1020 and the master key (Master_Secret). In the present embodiment, the challenge/response authentication method described above is used as an example of this mutual authentication method.

(Step S1506) If the authentication of the second ECU 1020 succeeds, a public key certificate is issued from the first ECU 1010 to the second ECU 1020.

In the embodiments described above, authentication is performed between the SIM 1052 of the communication module 1051 of the TCU 1050 and the first ECU 1010, between the IC chip 1202 of the maintenance tool 1200 and the first ECU 1010, between the server device 1300 and the first ECU 1010, and between the first ECU 1010 and the second ECU 1020 using the initial key. However, the present invention is not limited to these examples. For example, authentication may be performed between the SIM 1052 of the communication module 1051 of the TCU 1050 and the first ECU 1010, between the IC chip 1202 of the maintenance tool 1200 and the first ECU 1010, between the server device 1300 and the first ECU 1010, and between the first ECU 1010 and the second ECU 1020 using an in-vehicle common key instead of the initial key. When authenticating is performed with the in-vehicle common key, the first ECU 1010 transmits the in-vehicle common key to the SIM 1052 of the communication module 1051 of the TCU 1050, the IC chip 1202 of the maintenance tool 1200, and the server device 1300. The first ECU 1010 may encrypt the in-vehicle common key with the initial key and transmit the encrypted common key.

### <Modification>

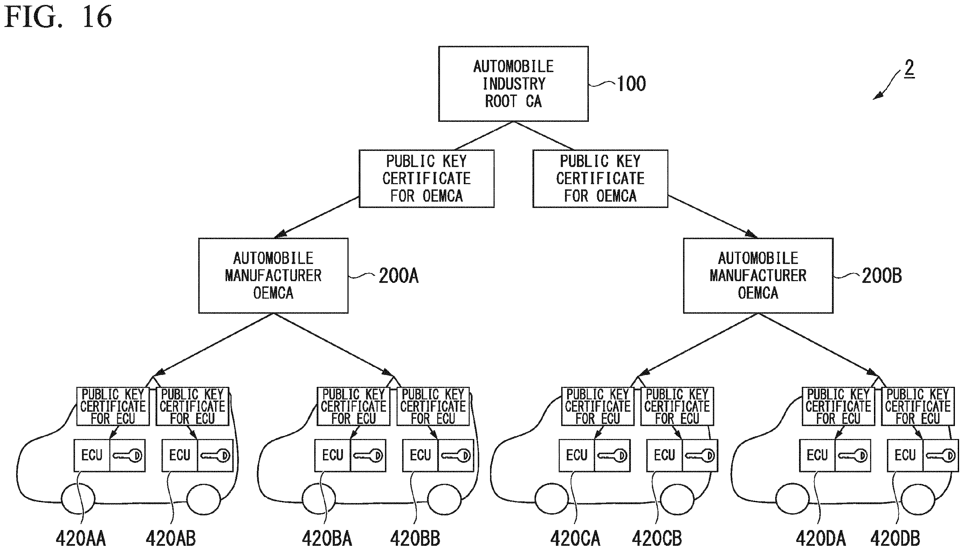

Fig. 16 is a diagram showing a hierarchical structure according to a modification. The hierarchical structure 2 according to the modification is identical to the hierarchical structure 1 according to the above embodiments with the in-vehicle CA 300 omitted. That is, in the hierarchical structure 2 according to the modification, an OEMCA 200 issues a public key certificate to a first ECU 1010 and an application installed in the first ECU 1010. The configuration of the in-vehicle CA 300 in Fig. 2 can be applied as the configuration of the OEMCA 200.

### <Operations of OEMCA and first ECU>

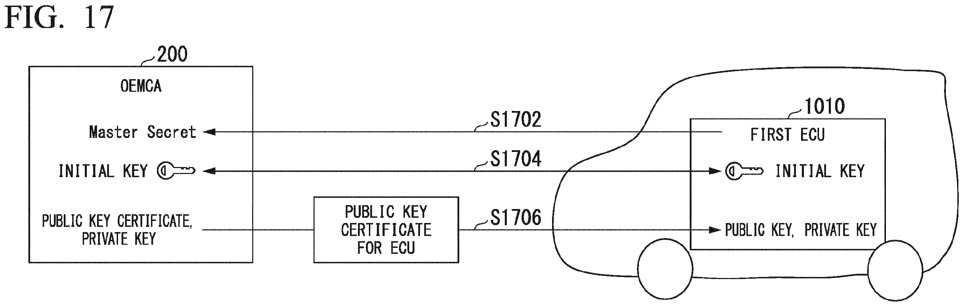

Next, an example of a method of issuing a public key certificate according to the modification will be described with reference to Fig. 17. Here, a description will be provided with regard to the case in which the OEMCA 200 issues a public key certificate to the first ECU 1010 as an example. It is to be noted that the present invention can also be applied to the case in which the OEMCA 200 issues a public key certificate to a second ECU 1020.

(Step S1702) The first ECU 1010 transmits an ECU_ID of the first ECU 1010 to the OEMCA 200.

(Step S1704) Upon receipt of the ECU_ID of the first ECU 1010 transmitted by the first ECU 1010, the OEMCA 200 performs mutual authentication with the first ECU 1010 using an initial key (= "digest (Master_Secret, ECU_ID)") generated from the ECU_ID of the first ECU 1010 and the master key (Master_Secret).

(Step S 1706) If the authentication of the first ECU 1010 succeeds, a public key certificate is issued from the OEMCA 200 to the first ECU 1010.

According to the embodiments and modification, a new public key infrastructure is provided for authentication of automobiles, vehicle-mounted ECUs, and applications installed in ECUs. Specifically, this has three layers, i.e., a layer of a root CA that authenticates automobile manufacturers, a layer of OEMCAs operated by their automobile manufacturers, and a layer of in-vehicle CAs that issue public key certificates to in-vehicle ECUs or applications.

Furthermore, an initial key derived from a master key preset in each ECU or an in-vehicle common key that the first ECU delivers to the second ECU using the initial key is used when a public key certificate is issued from an in-vehicle CA to an automobile, ECUs, or applications installed in ECUs. Thereby, it is possible to issue public key certificates after confirming the trustworthiness of ECUs.

In addition, it is possible to prevent issuance of public key certificates to fake ECUs or fake applications installed in ECUs. Further, authentication based on a public key certificate can be performed between automobiles of different automobile manufacturers, between ECUs, and between applications installed in ECUs.

Although the embodiments of the present invention have been described above in detail with reference to the drawings, the specific configurations thereof are not limited to those of the embodiments and also include designs or the like without departing from the spirit of the present invention.

Although vehicles are exemplified by automobiles in the above embodiments, the present invention can also be applied to vehicles other than automobiles such as motorized bicycles or railroad cars.

A computer program for realizing the functions of the root CA, the OEMCA, the first ECU, or the second ECUs may be recorded on a computer-readable recording medium and a computer system may be caused to read and execute the program recorded on the recording medium. The "computer system" referred to here may include an OS or hardware such as peripheral devices. The "computer-readable recording medium" refers to a portable medium such as a flexible disk, a magneto-optical disk, a ROM, a writable nonvolatile memory such as a flash memory, or a digital versatile disc (DVD), or a storage device such as a hard disk provided in a computer system.

The "computer readable recording medium" includes one that holds the program for a certain period of time, like a volatile memory (for example, a dynamic random access memory (DRAM)) provided in a computer system which serves as a server or a client when the program has been transmitted via a network such as the Internet or a communication line such as a telephone line.

The program may also be transmitted from a computer system in which the program is stored in a storage device or the like to another computer system via a transmission medium or by transmission waves in the transmission medium. Here, the "transmission medium" for transmitting the program refers to a medium having a function of transmitting information, like a network (a communication network) such as the Internet and a communication line (a communication wire) such as a telephone line.

The program may be one for realizing some of the above-described functions.

The program may also be a so-called differential file (differential program) which can realize the above-described functions in combination with a program already recorded in the computer system.

### INDUSTRIAL APPLICABILITY

According to the present invention, it is possible to appropriately issue a public key certificate to an automobile, an ECU, or an application installed in the ECU.

### Reference Signs List

100 Root CA
102 CA public key certificate generator
105 Root CA key storage
145 Controller
150 Application
135 Communicator
160 Storage
200 OEMCA
202 Public key certificate generator
205 CA key storage
208 CA key generator
209 CA public key certificate acquirer
230 Communicator
240 Controller
250 Application
260 Storage
300 In-vehicle CA
301 Initial key generator
302 Public key certificate generator
304 Encryption processing unit
305 CA key storage
308 CA key generator
309 CA public key certificate acquirer
330 Communicator
340 Controller
345 Application
355 Authenticator
360 Storage
1001 Automobile
1010 First ECU
1011 Main computing unit
1012 HSM
1013 Storage
1021 Main computing unit
1022 SHE
1023 Storage
20 Interface unit
21 Controller
22 Storage
33 Initial key generator
34 In-vehicle key generator
35 Encryption processing unit
36 Authenticator
37 Key generator
38 Public key certificate acquirer
1020 Second ECU
40 Interface unit
41 Controller
42 Storage
53 Encryption processing unit
54 Authenticator
55 Key generator
56 Public key certificate acquirer
1030 CAN
1050 TCU
1051 Communication module
1052 SIM
1060 Diagnostic port

## Claims

1. A system comprising a certification authority and a vehicle-mounted computer which is mounted in a vehicle, wherein the certification authority includes:
a certification authority key storage configured to store a certification authority public key certificate and a certification authority private key;
a first communicator configured to receive an issuance request that is configured to request issuance of a vehicle-mounted computer public key certificate of a vehicle-mounted computer public key from the vehicle-mounted computer; and
a vehicle-mounted computer public key certificate issuer configured to apply a signature to the vehicle-mounted computer public key included in the issuance request with the certification authority private key and to issue the vehicle-mounted computer public key certificate,
wherein the first communicator is configured to transmit the issued vehicle-mounted computer public key certificate to the vehicle-mounted computer that is a transmission source of the issuance request, and
the vehicle-mounted computer includes:
a vehicle-mounted computer key generator configured to generate the vehicle-mounted computer public key and a vehicle-mounted computer private key that is paired with the vehicle-mounted computer public key; and
a public key certificate acquirer configured to transmit the issuance request to the certification authority and to acquire the vehicle-mounted computer public key certificate that the certification authority transmits in response to the issuance request.

2. The system according to claim 1, wherein:
the certification authority further includes a first authenticator configured to perform authentication with the vehicle-mounted computer on the basis of a common key;
the vehicle-mounted computer further includes a second authenticator configured to perform authentication with the first authenticator of the certification authority on the basis of the common key; and
the vehicle-mounted computer public key certificate issuer is configured to issue the vehicle-mounted computer public key certificate if the authentication of the first authenticator succeeds.

3. The system according to claim 2, wherein the common key includes an initial key held in the vehicle-mounted computer,
the vehicle-mounted computer further includes:
a first storage configured to store the initial key; and
a second communicator configured to transmit identification information of the vehicle-mounted computer to the certification authority, and
the certification authority further includes:
a second storage configured to store a master key used to generate the initial key; and
an initial key generator configured to generate the initial key on the basis of the master key and the identification information of the vehicle-mounted computer transmitted by the vehicle-mounted computer.

4. The system according to claim 2, wherein:
the first authenticator is configured to exchange the common key with the second authenticator whose authentication has succeeded; and
the second authenticator is configured to exchange the common key with the first authenticator whose authentication has succeeded.

5. The system according to any one of claims 1 to 4, wherein the certification authority is an intermediate certification authority included in the vehicle.

6. The system according to any one of claims 1 to 5, wherein the certification authority is arranged in the vehicle-mounted computer or in a communication module in the vehicle.

7. The system according to any one of claims 1 to 4, wherein the certification authority is arranged in a server device to which the certification authority is connected via a communication module of the vehicle or in a maintenance tool to which the certification authority is connected via a diagnostic port of the vehicle.

8. A certification authority comprising:
a certification authority key storage configured to store a certification authority public key certificate and a certification authority private key;
a communicator configured to receive an issuance request that is configured to request issuance of a vehicle-mounted computer public key certificate of a vehicle-mounted computer public key transmitted by a vehicle-mounted computer; and
a vehicle-mounted computer public key certificate issuer configured to apply a signature to the vehicle-mounted computer public key included in the issuance request with the certification authority private key and to issue the vehicle-mounted computer public key certificate,
wherein the communicator is configured to transmit the issued vehicle-mounted computer public key certificate to the vehicle-mounted computer that is a transmission source of the issuance request.

9. A vehicle-mounted computer that is mounted in a vehicle, the vehicle-mounted computer comprising:
a vehicle-mounted computer key generator configured to generate a vehicle-mounted computer public key and a vehicle-mounted computer private key that is paired with the vehicle-mounted computer public key; and
a public key certificate acquirer configured to transmit an issuance request that is configured to request issuance of a vehicle-mounted computer public key certificate of the vehicle-mounted computer public key to a certification authority and to acquire the vehicle-mounted computer public key certificate that the certification authority transmits in response to the issuance request.

10. A vehicle comprising the vehicle-mounted computer according to claim 9.

11. A vehicle comprising:
the certification authority according to claim 8; and
the vehicle-mounted computer according to claim 9.

12. A public key certificate issuing method that is performed by a system including a certification authority and a vehicle-mounted computer that is mounted in a vehicle, the public key certificate issuing method comprising:
storing, by the certification authority, a certification authority public key certificate and a certification authority private key;
generating, by the vehicle-mounted computer, a vehicle-mounted computer public key and a vehicle-mounted computer private key that is paired with the vehicle-mounted computer public key;
transmitting, by the vehicle-mounted computer, an issuance request that is configured to request issuance of a vehicle-mounted computer public key certificate of the vehicle-mounted computer public key to the certification authority;
receiving, by the certification authority, the issuance request transmitted by the vehicle-mounted computer;
applying, by the certification authority, a signature to the vehicle-mounted computer public key included in the issuance request with the certification authority private key and issuing the vehicle-mounted computer public key certificate;
transmitting, by the certification authority, the issued vehicle-mounted computer public key certificate to the vehicle-mounted computer that is a transmission source of the issuance request; and
acquiring, by the vehicle-mounted computer, the vehicle-mounted computer public key certificate transmitted by the certification authority.

13. A program causing a computer of a certification authority to execute processes of:
storing a certification authority public key certificate and a certification authority private key;
receiving an issuance request that is configured to request issuance of a vehicle-mounted computer public key certificate of a vehicle-mounted computer public key from a vehicle-mounted computer;
applying a signature to the vehicle-mounted computer public key included in the issuance request with the certification authority private key and issuing the vehicle-mounted computer public key certificate; and
transmitting the issued vehicle-mounted computer public key certificate to the vehicle-mounted computer that is a transmission source of the issuance request.

14. A program causing a vehicle-mounted computer to execute processes of:
generating a vehicle-mounted computer public key and a vehicle-mounted computer private key that is paired with the vehicle-mounted computer public key;
transmitting an issuance request that is configured to request issuance of a vehicle-mounted computer public key certificate of the vehicle-mounted computer public key to a certification authority; and
acquiring the vehicle-mounted computer public key certificate transmitted by the certification authority.
